# FASCICULE DE BREVET EUROPEEN

(11) **EP 3 317 799 B1**
(45) Date de publication et mention de la délivrance du brevet: **27.03.2019**
(21) Numéro de dépôt: 16750886.0
(22) Date de dépôt: 23.06.2016
(51) Int. Cl.: G06F 21/10, H04N 21/254, H04N 21/262

(54) **PROCÉDÉ DE FOURNITURE D'UN CONTENU MULTIMÉDIA PROTÉGÉ**
VERFAHREN ZUR BEREITSTELLUNG VON GESCHÜTZTEM MULTIMEDIAINHALT
METHOD FOR PROVIDING PROTECTED MULTIMEDIA CONTENT

(30) Priorité: 01.07.2015 FR 1556223
(43) Date de publication de la demande: 09.05.2018
(73) Titulaire: Viaccess, 92057 Paris La Défense Cedex (FR)
(72) Inventeur: PHIRMIS, Mathieu, 92160 Antony (FR)
(74) Mandataire: Colombo, Michel
(86) Numéro de dépôt international: PCT/FR2016/051533
(87) Numéro de publication internationale: WO 2017/001747

(56) Documents cités:
- WO-A2-2005/091635
- US-A1- 2012 008 781
- US-A1- 2014 281 481

## Description

L'invention concerne un procédé de fourniture, par une tête de réseau, d'un contenu multimédia protégé par un système de protection de contenus multimédia, à des terminaux mécaniquement indépendants les uns des autres et raccordés à un même serveur de droits d'accès par l'intermédiaire d'un réseau grande distance de transmission d'informations. L'invention concerne également un procédé d'émission, par une tête de réseau, d'un contenu multimédia protégé pour la mise en oeuvre de ce procédé de fourniture de contenus multimédia. L'invention concerne en outre un procédé d'obtention, par un terminal, d'un contenu multimédia protégé pour la mise en oeuvre de ce procédé de fourniture d'un contenu multimédia. L'invention concerne enfin une tête de réseau, un terminal et un support d'enregistrement d'informations pour la mise en oeuvre de ces procédés.

Les procédés considérés, peuvent être mis en oeuvre au titre de tout service de fourniture de contenus multimédia protégés, dans tout système de fourniture en ligne de contenus multimédia protégés, dans lequel une tête de réseau assure la protection des contenus et leur transmission à une pluralité de terminaux.

Une liaison point-à-point est une liaison « unicast ». On désigne également ici par le terme liaison point-à-multipoints une liaison choisie dans le groupe composé d'une liaison de télédiffusion, plus connue sous les termes de liaison « broadcast », et d'une liaison multidiffusion, plus connue sous le terme de liaison « multicast ». La liaison point-à-point est une liaison bidirectionnelle. La liaison point-à-multipoints est une liaison unidirectionnelle de l'émetteur vers les récepteurs.

Un terminal est utilisé par un client du service pour accéder à un contenu. Accéder à un contenu multimédia, signifie ici le charger en mémoire et en lever la protection, à la volée alors qu'on le reçoit, ou depuis un support d'enregistrement sur lequel il a préalablement été enregistré, en vue de le jouer, de l'enregistrer, ou d'en faire toute autre utilisation offerte par le service de fourniture de contenus multimédia protégés.

Les contenus fournis sont des contenus audiovisuels, par exemple des programmes de télévision, des contenus audio seulement, par exemple un programme radiophonique, ou plus généralement tout contenu numérique contenant de la vidéo et/ou de l'audio tel qu'une application informatique, un jeu, un diaporama, une image ou tout ensemble de données.

Parmi ces contenus, on considérera plus particulièrement dans la suite des contenus dits temporels. Un contenu multimédia temporel est un contenu multimédia dont le jeu est une succession, dans le temps, de sons, dans le cas d'un contenu temporel audio, ou d'images, dans le cas d'un contenu temporel vidéo, ou de sons et d'images temporellement synchronisés entre eux dans le cas d'un contenu multimédia temporel audiovisuel. Un contenu multimédia temporel peut également comporter des composantes temporelles interactives synchronisées avec les sons ou les images.

Pour être fourni, un tel contenu est d'abord codé, c'est-à-dire compressé, de façon à ce que sa transmission requière une moindre bande passante.

A cet effet, la composante vidéo du contenu est codée selon un format vidéo, tel que MPEG-2. Le lecteur intéressé pourra trouver une présentation complète de ce format dans le document publié par l'Organisation internationale de normalisation sous la référence ISO/IEC 13818-2:2013 et le titre « Technologies de l'information - Codage générique des images animées et du son associé - Partie 2: Donnée vidéo ». De nombreux autres formats, tels que MPEG-4 ASP, MPEG-4 Part 2, MPEG-4 AVC (ou Part 10), HEVC (High Efficiency Video Coding), ou WMV (Windows Media Video) peuvent alternativement être utilisés, et reposent sur les mêmes principes.

Une telle méthode de codage fait appel à des procédés généraux de compression de données. Pour les images fixes, elle exploite notamment la redondance spatiale interne à une image, la corrélation entre les points voisins et la moindre sensibilité de l'oeil aux détails. Pour les images animées, elle exploite la forte redondance temporelle entre images successives. L'exploitation de cette dernière permet de coder certaines images du contenu, ici dites déduites, en référence à d'autres, ici dites sources, par exemple par prédiction ou interpolation, de sorte que leur décodage n'est possible qu'après celui desdites images sources. D'autres images, ici dites initiales, sont codées sans référence à de telles images sources, c'est-à-dire qu'elles contiennent chacune, lorsqu'elles sont codées, l'ensemble des informations nécessaires à leur décodage et donc qu'elles peuvent être complètement décodées indépendamment des autres images. Les images initiales sont ainsi le point d'entrée obligatoire lors de l'accès au contenu. Le contenu codé résultant ne comporte donc pas les données nécessaires au décodage de chacune des images indépendamment des autres, mais est constitué de « séquences » selon la terminologie MPEG-2. Une séquence réalise la compression d'au moins un « groupe d'images » (ou GOP, pour Group Of Pictures, dans MPEG-2). Un groupe d'images est une suite d'images consécutives dans laquelle chaque image est, soit initiale et source pour au moins une image déduite contenue dans la même suite d'images consécutives, soit déduite et telle que chacune des images sources nécessaires à son décodage appartient à la même suite d'images consécutives, et ne contenant pas de suite d'images consécutives plus petite et possédant ces mêmes propriétés. Le groupe d'images est ainsi la plus petite partie de contenu à laquelle on peut accéder sans avoir à décoder au-préalable une autre partie de ce contenu. Une séquence est délimitée par une « en-tête » et une « fin », chacune identifiée par un premier code spécifique. L'en-tête comporte des paramètres qui caractérisent des propriétés attendues des images décodées, telles notamment que tailles horizontales et verticales, ratio, fréquence. Le standard recommande de répéter l'en-tête entre les groupes d'images de la séquence, de façon à ce que ses occurrences successives soient espacées d'environ quelques secondes dans le contenu codé.

Par exemple, un groupe d'images comporte le plus couramment de 10 à 12 images, représentant une durée de jeu comprise entre 0,4 et 0,5 seconde, dans un système à 25 images par seconde.

Un contenu multimédia temporel peut comporter plusieurs composantes vidéo. Dans ce cas, chacune de ces composantes est codée comme ci-dessus décrit.

La composante audio du contenu est par ailleurs codée selon un format audio tel que MPEG-2 Audio. Le lecteur intéressé pourra trouver une présentation complète de ce format dans le document publié par l'Organisation internationale de normalisation sous la référence ISO/IEC 13818-3:1998 et le titre « Technologies de l'information - Codage générique des images animées et des informations sonores associées - Partie 3: Son ». De nombreux autres formats, tels que MPEG-1 Layer III, mieux connu sous l'appellation MP3, AAC (Advanced Audio Coding), Vorbis ou WMA (Windows Media Audio), peuvent alternativement être utilisés, et reposent sur les mêmes principes.

Une telle méthode de compression d'un contenu temporel audio obéit aux mêmes principes ci-dessus décrits pour celle d'un contenu temporel vidéo. Le contenu codé résultant est donc, de façon analogue, constitué de « trames ». Une trame est l'analogue, en audio, d'un groupe d'images en vidéo. La trame est donc notamment la plus petite partie de contenu audio à laquelle on peut accéder sans avoir à décoder une autre partie de ce contenu audio. La trame contient en outre l'ensemble des informations utiles à son décodage.

Par exemple, une trame comporte 384 ou 1152 échantillons codant chacun un son, représentant, selon la fréquence d'échantillonage du signal, une durée de jeu de 8 à 12, ou 24 à 36 millisecondes, soit typiquement quelques dizaines de millisecondes.

Un contenu multimédia temporel peut comporter plusieurs composantes audio. Dans ce cas, chacune de ces composantes est codée comme ci-dessus décrit.

Les composantes codées du contenu multimédia, également qualifiées de trains élémentaires de données, sont ensuite multiplexées, c'est-à-dire, notamment, synchronisées, puis combinées en un seul train de données, également dit flux multimédia, ou flux.

Un tel contenu, notamment lorsqu'il est l'objet de droits tels que des droits d'auteur ou des droits voisins, est fourni protégé par un système de protection de contenus multimédia, qui permet d'assurer le respect de conditions d'accès au contenu qui découlent de ces droits.

Il est alors typiquement fourni chiffré au titre de sa protection par un système de gestion de droits numériques, ou DRM, pour Digital Rights Management, en anglais. Ce chiffrement est généralement réalisé au moyen d'une clé de chiffrement, par un algorithme symétrique. Il s'applique au flux résultant du multiplexage ou, avant multiplexage, aux composantes du contenu codé.

Un système de DRM est en effet un système de protection de contenus multimédia. La terminologie du domaine des systèmes de gestion de droits numériques est ainsi utilisée dans la suite de ce document. Le lecteur intéressé pourra par exemple en trouver une présentation plus complète dans les documents suivants :
- concernant l'architecture générale d'un système de DRM : DRM Architecture, Draft version 2.0, OMA-DRM-ARCH-V2_0-20040518-D, Open Mobile Alliance, 18 mai 2004,
- concernant plus particulièrement les licences : DRM Spécification, Draft version 2.1, OMA-TS-DRM-DRM-V2_1-20060523-D, Open Mobile Alliance, 23 mai 2006.

Accéder à un contenu multimédia temporel ainsi protégé, signifie ici plus précisément, successivement accéder, à la volée alors qu'on les reçoit, à des segments successifs, c'est-à-dire :
- charger en mémoire les segments successifs du contenu multimédia, puis
- en lever la protection, puis
- les décoder, puis
- les transmettre à un appareil multimédia apte à les jouer, les enregistrer, ou en faire toute autre utilisation offerte par le service de fourniture de contenus multimédia protégés. L'accès au contenu multimédia temporel protégé ne sera dans la suite décrit qu'en vue de son jeu. Il est identique dans le cas de toute autre utilisation offerte par le service de fourniture de contenus multimédia protégés.

Par « segment », on désigne une partie restreinte du flux multimédia en clair dont le jeu a une durée inférieure à celle du jeu du flux multimédia en entier. Un segment comporte donc une partie restreinte de chaque composante vidéo ou audio du flux multimédia en clair, dont le jeu a une même durée inférieure à celle du jeu du flux multimédia en entier. Ces parties restreintes de composantes sont synchronisées dans le flux pour être jouées simultanément. Un segment comporte donc la partie restreinte de la suite temporelle de séquences vidéo ou de groupes d'images, ou de trames audio réalisant le codage de cette partie restreinte de composante du flux multimédia en clair. Cette partie restreinte est constituée d'une pluralité de séquences vidéos ou de groupes d'images, ou de trames audio successives. Successives s'entend ici comme se suivant immédiatement, c'est-à-dire sans être séparées, dans le déroulement temporel du contenu, par d'autres séquences vidéo ou de groupes d'images, ou de trames audio. Typiquement, un segment comporte plus de dix, cent, mille ou dix mille, groupes d'images vidéo successifs d'une même composante vidéo codée du flux, ou plus de dix à cent fois plus de trames audio successives d'une même composante audio codée du flux.

Ici, par « en clair », on désigne le fait que le flux multimédia ou le segment n'a plus besoin d'être désembrouillé pour être joué, par un appareil multimédia, de façon directement perceptible et intelligible par un être humain.

Par « appareil multimédia », on désigne en outre tout dispositif apte à jouer le flux multimédia en clair, tel qu'un téléviseur ou un lecteur multimédia.

Ici, par « à la volée », on désigne le fait que les segments du contenu multimédia sont traités au fur et à mesure de leur réception, sans attendre que le contenu multimédia complet, c'est-à-dire l'ensemble de ses segments, ait été entièrement reçu.

Dans un tel système de gestion de droits numériques, de façon à en améliorer la protection, le contenu est fourni, par le système de fourniture de contenus multimédia protégés, scindé en plusieurs segments successifs de contenu individuellement protégés par le système de gestion de droits numériques. Ces segments sont donc ordonnés temporellement les uns par rapport aux autres.

Plus précisément, chaque segment Sᵢ est chiffré par un algorithme symétrique au moyen d'une clé de contenu spécifique Kₛᵢ. Cette clé Kₛᵢ est dite « spécifique » car elle est uniquement utilisée pour chiffrer ce segment Sᵢ parmi l'ensemble des segments du contenu multimédia.

Un segment Sᵢ n'est donc pas caractérisé par sa structure, mais par la clé Kₛᵢ utilisée pour le chiffrer. Un segment est donc la pluralité de séquences vidéos et de trames audios immédiatement successives chiffrées avec une même clé Kₛᵢ.

Dans un tel système de gestion de droits numériques, l'obtention d'une licence intermédiaire Lᵢ, permet à un terminal d'accéder à un segment Sᵢ. La licence intermédiaire Lᵢ comporte un droit d'accès nécessaire à un terminal pour accéder à un segment du contenu. Le droit d'accès comporte typiquement le cryptogramme (Kₛᵢ)*K_{Gp}. Le droit d'accès peut également comporter une règle d'accès qui décrit des utilisations du contenu multimédia protégé que le terminal est autorisé à faire.

Pour améliorer encore la protection du contenu, un niveau intermédiaire de chiffrement des clés Kₛᵢ est utilisé. Il permet de changer, au cours du déroulement temporel du contenu, les clés de chiffrement K_{Gp} utilisées pour calculer les cryptogrammes (Kₛᵢ)*K_{Gp} transportés dans les licences Lᵢ.

On regroupe à cet effet les segments en blocs de segments. Chaque bloc ne contient qu'une partie restreinte des segments du contenu. Typiquement, chaque bloc contient au minimum un segment et, généralement, plusieurs segments successifs. Successifs s'entend ici comme se suivant immédiatement, c'est-à-dire sans être séparés, dans le déroulement temporel du contenu, par des segments n'appartenant pas au bloc considéré. On associe à chacun de ces blocs une clé intermédiaire K_{Gp}. La clé Kₛᵢ nécessaire au déchiffrement d'un segment, est chiffrée avec la clé K_{Gp} associée au bloc auquel appartient ce segment. Le cryptogramme résultant (Kₛᵢ)*K_{Gp} est ensuite inséré dans la licence Lᵢ transmise conjointement avec ce segment.

La licence Lᵢ comporte un identifiant d'une licence Lₚ, dite « de terminal », qui comporte elle-même le cryptogramme (K_{Gp})*K_{T} de la clé intermédiaire K_{Gp} obtenu par chiffrement de cette clé K_{Gp} avec la clé K_{T} de terminal.

Un bloc de segments n'est donc pas caractérisé par sa structure, mais par la clé intermédiaire K_{Gp} utilisée pour chiffrer chaque clé Kₛᵢ de tous les segments de ce bloc. Un bloc est donc formé de l'ensemble des segments dont la clé Kₛᵢ est chiffrée avec une même clé intermédiaire K_{Gp}.

Dans un tel système, un terminal reçoit donc, conjointement à un segment chiffré, une licence intermédiaire Lᵢ comportant le cryptogramme (Kₛᵢ)*K_{Gp} de la clé de contenu nécessaire au déchiffrement de ce segment.

Pour accéder au contenu en vue d'en faire une utilisation donnée souhaitée, le terminal extrait le droit d'accès de la licence Lᵢ.

Afin d'accéder au segment, le terminal doit d'abord obtenir la licence Lₚ de terminal qui comporte le cryptogramme (K_{Gp})*K_{T}. Le terminal obtient cette licence Lₚ en soumettant au serveur de droits d'accès une requête de droit d'accès. Cette requête est soumise « out-of-band », c'est-à-dire sur une liaison point-à-point entre le terminal et le serveur de droits d'accès. La réponse du serveur de droit d'accès est aussi transmise au terminal par cette même liaison point-à-point.

Le terminal peut ensuite évaluer la licence Lₚ. Si le résultat de cette évaluation est positif, il déchiffre le cryptogramme (K_{Gp})*K_{T} qu'elle comporte, au moyen de sa clé K_{T} de terminal. Si le résultat de cette évaluation est négatif, le terminal inhibe l'exploitation de la licence Lₚ, et ne déchiffre notamment pas le cryptogramme (K_{Gp})*K_{T} qu'elle comporte. Cela interdit ainsi l'accès au bloc de segments protégés grâce à des clés Kₛᵢ chiffrées à l'aide de cette clé intermédiaire K_{Gp}.

Dans le cas où le terminal n'a pas reçu la licence Lₚ, il inhibe de la même façon son traitement, et interdit ainsi l'accès au bloc de segments protégé en cours de réception. Il en résulte, pour l'utilisateur du terminal, une interruption du jeu du contenu.

Il est donc important que le terminal obtienne la licence Lₚ associée au prochain bloc de segments à recevoir suffisamment à l'avance par rapport au début de la réception de ce prochain bloc de segments. Le début de la réception du prochain bloc de segments est également désigné comme étant le moment de la prochaine rotation de clé intermédiaire dans le flux. A ce sujet, l'homme du métier parle de « fourniture anticipée de licence », ou « license pre-delivery », en anglais.

De façon à garantir la fourniture anticipée de la licence Lₚ, toute licence Lₚ transmise à un terminal comporte une date limite avant laquelle ce terminal doit requérir la prochaine licence Lₚ₊₁ de terminal auprès du serveur de droits d'accès. La prochaine date à laquelle le terminal doit se connecter au serveur de droits d'accès pour requérir la prochaine licence de terminal est appelée « échéance de renouvellement ». Lorsque cette échéance de renouvellement est atteinte, le terminal soumet une requête de droits d'accès au serveur de droits d'accès, qui lui transmet, en réponse, la prochaine licence Lₚ₊₁ de terminal.

De temps en temps, il est souhaitable de retarder la date limite avant laquelle le terminal doit requérir la prochaine licence Lₚ₊₁ de terminal auprès du serveur de droits d'accès. Par exemple, c'est le cas lorsqu'il existe des problèmes de connexion entre le terminal et le serveur de droits d'accès ou lorsque le serveur de droits d'accès est indisponible. Il peut aussi être souhaitable d'avancer cette date limite. Par exemple, cela peut être utilisé à titre de contremesure en réponse à des attaques contre la sécurité du service et du système de fourniture de contenus multimédia protégés.

De l'état de la technique est également connu de :
- US2012/008781A1,
- US2014/281481A1, et
- WO2005/091635A2.

Les procédés connus présentent le premier inconvénient selon lequel il est très difficile de modifier ultérieurement la date limite avant laquelle le terminal doit requérir la prochaine licence Lₚ₊₁ de terminal auprès du serveur de droits d'accès. En effet, à cette fin, il faudrait rediffuser de nouvelles licences de terminal courantes à chacun des terminaux avec une nouvelle date limite.

Les procédés connus présentent en outre le deuxième inconvénient selon lequel l'échéance de renouvellement est systématiquement choisie égale à cette date limite. Par conséquent, l'échéance de renouvellement est la même pour tous les terminaux. Dès lors, tous les terminaux soumettent simultanément, à cette échéance de renouvellement, une requête de droits d'accès au serveur de droits d'accès. Cela provoque un pic de charge de calcul du serveur de droits d'accès et de trafic réseau.

L'invention vise à remédier au premier inconvénient ci-dessus.

L'invention a ainsi pour objet un procédé, conforme à la revendication 1, de fourniture, par une tête de réseau, d'un contenu multimédia protégé.

Dans un tel procédé, une donnée temporelle est transmise par la liaison point-à-multipoint à l'ensemble des terminaux. Cette donnée temporelle permet de déterminer si la date limite pour transmettre au serveur de droit d'accès la requête de droit d'accès a changé. Ainsi, sa transmission permet de notifier au terminal un éventuel changement de cette date limite. En réponse à un tel changement, chaque terminal peut modifier son échéance de renouvellement. Cette échéance de renouvellement permet au terminal de décider, en fonction de sa valeur et à un instant donné, de transmettre au serveur de droits d'accès une requête de droits d'accès. Un tel procédé permet donc de modifier l'échéance de renouvellement du terminal, et donc l'instant donné ci-dessus, sans avoir à transmettre une nouvelle licence par l'intermédiaire d'une liaison point-à-point à chacun des terminaux et donc de remédier au premier inconvénient cité. Cette solution de notification, reposant largement sur l'existant et requérant peu de développement dans la tête de réseau et les terminaux, est en outre simple et peu coûteuse.

L'invention a également pour objet un procédé d'émission, par une tête de réseau, pour la mise en oeuvre du procédé de fourniture revendiqué, d'un contenu multimédia protégé.

L'invention a également pour objet un procédé d'obtention, par un terminal, pour la mise en oeuvre du procédé de fourniture revendiqué, d'un contenu multimédia protégé.

Les modes de réalisation de ce procédé d'obtention de contenus multimédia protégés présentent en outre les avantages suivants :
- Le test de l'une des conditions DSᵢ > DSᵢ₋₁ + ΔT₁ et DSᵢ ≥ DSᵢ₋₁ + ΔT₁, permet de ne modifier l'échéance de renouvellement prédéterminée que lorsque la date limite a été retardée d'au moins ΔT₁.
- Le test de l'une des conditions DSᵢ < DSᵢ₋₁ - ΔT₂, et DSᵢ ≤ DSᵢ₋₁ - ΔT₂, permet de ne modifier l'échéance de renouvellement prédéterminée que lorsque la date limite a été avancée d'au moins ΔT₂.
- Modifier l'échéance de renouvellement prédéterminée en lui affectant une valeur calculée au moyen d'une fonction apte à répartir uniformément les échéances de renouvellement prédéterminées des terminaux, permet de lisser la charge de calcul du serveur de droits d'accès et le trafic réseau.
- Déclencher la transmission immédiate, au serveur de droits d'accès, de la requête de droits d'accès, si la dernière donnée temporelle reçue est égale à un code préenregistré, permet d'utiliser la donnée temporelle pour remplir deux fonctions différentes, à savoir modifier l'échéance de renouvellement et, alternativement, déclencher la transmission de la requête de droit d'accès indépendamment de l'échéance de renouvellement prédéterminée.

L'invention a également pour objet un support d'enregistrement d'informations comportant des instructions pour la mise en oeuvre d'un des procédés revendiqués, lorsque ces instructions sont exécutées par un calculateur électronique.

L'invention a également pour objet une tête de réseau pour la mise en oeuvre du procédé d'émission revendiqué.

L'invention a enfin pour objet un terminal pour la mise en oeuvre du procédé d'obtention revendiqué.

L'invention sera mieux comprise à la lecture de la description qui va suivre, donnée uniquement à titre d'exemple non limitatif, et faite en référence aux dessins sur lesquels :
- la figure 1 est une représentation schématique de l'architecture d'un système de fourniture de contenus multimédia protégés,
- la figure 2 est une représentation schématique d'une licence intermédiaire,
- la figure 3 est une représentation schématique d'une licence de terminal,
- la figure 4 est une représentation schématique d'un flux transmis par une tête de réseau à un terminal,
- la figure 5 est une représentation schématique d'un procédé de fourniture de contenus multimédia protégés en utilisant l'architecture de la figure 1.

Dans ces figures, les mêmes références sont utilisées pour désigner les mêmes éléments.

Dans la suite de cette description, les caractéristiques bien connues de l'homme du métier ne sont pas décrites en détail.

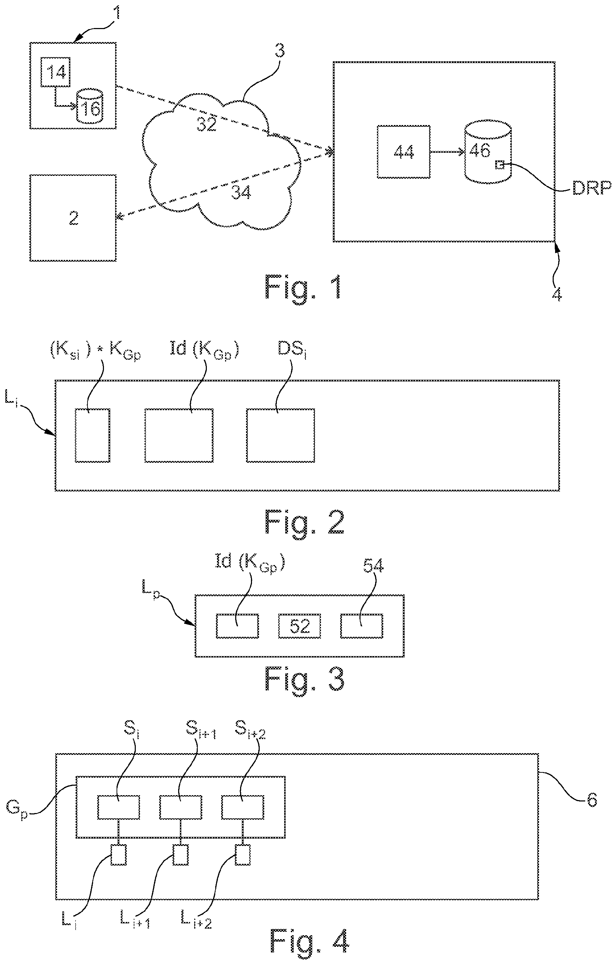

La figure 1 représente un système de fourniture de contenus multimédia protégés.

Ce système comprend une pluralité, typiquement des milliers, de terminaux, mécaniquement indépendants les uns des autres, reliés, par l'intermédiaire d'un réseau 3, d'une part à une tête 1 de réseau, et d'autre part à un serveur 2 de droits d'accès. Ici, on suppose que tous ces terminaux sont identiques. Ainsi, pour simplifier l'illustration, seul un terminal 4 est représenté sur la figure 1.

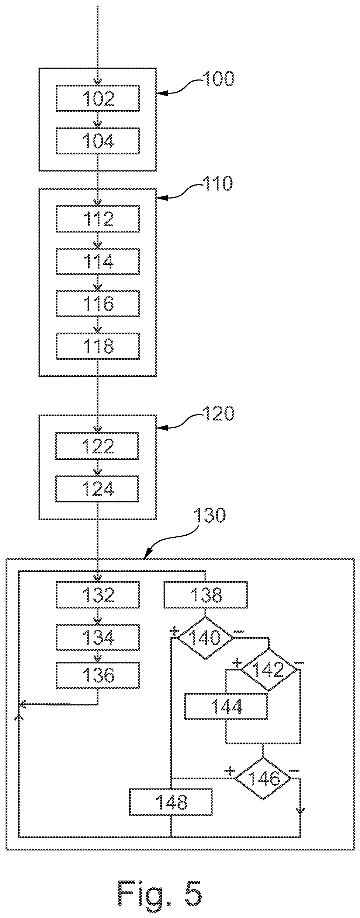

Le terminal 4 est apte à accéder à un contenu en vue de le jouer. A cet effet, le terminal 4 comporte un calculateur électronique 44 programmable et une mémoire 46. Le calculateur 44 est apte à exécuter des instructions enregistrées dans la mémoire 46. Typiquement, il s'agit d'un microprocesseur tel qu'un microprocesseur Itanium de la société Intel. La mémoire 46 comporte les instructions nécessaires à l'exécution du procédé de la figure 5. La mémoire 46 comporte une échéance de renouvellement prédéterminée DRP. L'échéance DRP permet au terminal de décider, en fonction de sa valeur et à un instant donné, de transmettre au serveur de droits d'accès une requête de droits d'accès. Ici, l'échéance DRP est exprimée sous la forme d'une durée restante avant la prochaine date à laquelle le terminal 4 déclenchera automatiquement la transmission d'une requête de droit d'accès au serveur 2.

Le réseau 3 est un réseau grande distance de distribution d'informations permettant d'établir une liaison de communication point-à-multipoints 32 entre la tête 1 de réseau et le terminal 4. Le réseau 3 permet aussi d'établir une liaison de communication point-à-point 34 entre le terminal 4 et le serveur 2. Par exemple, le réseau 3 est la toile d'araignée mondiale, plus connue sous le terme de « réseau Internet ».

La tête 1 est apte à protéger un contenu, et à le transmettre au terminal 4. A cet effet la tête 1 comporte un calculateur électronique 14 programmable et une mémoire 16. Le calculateur 14 est apte à exécuter des instructions enregistrées dans la mémoire 16. Typiquement, il s'agit d'un microprocesseur tel qu'un microprocesseur Tegra de la société Nvidia, ou un processeur Cortex-A8 de la société ARM. La mémoire 16 comporte des instructions nécessaires à l'exécution du procédé de la figure 5.

Le serveur 2 de droits d'accès est apte à fournir au terminal 4, en réponse à une requête, une licence de terminal comportant un droit d'accès nécessaire pour accéder à un contenu multimédia et préalablement acquis par le terminal 4.

Ici, pour la tête 1, le serveur 2 et le terminal 4, seules les différences par rapport à une tête de réseau conventionnelle, un serveur de droit d'accès conventionnel et à un terminal conventionnel sont décrites en détails. Pour les informations concernant une tête de réseau conventionnelle, un serveur de droit d'accès conventionnel et un terminal conventionnel, le lecteur peut se référer à l'état de l'art cité dans l'introduction de cette demande de brevet.

La figure 2 représente une licence intermédiaire Lᵢ. Cette licence Lᵢ comporte notamment un cryptogramme (Kₛᵢ)*K_{Gp} obtenu en chiffrant une clé de contenu Kₛᵢ avec une clé intermédiaire K_{Gp}. La clé Kₛᵢ est la clé utilisée pour chiffrer le segment Sᵢ du contenu multimédia. La clé K_{Gp} est la clé utilisée pour chiffrer les clés Kₛᵢ de tous les segments du bloc Gₚ. La licence Lᵢ comporte également un identifiant Id(K_{Gp}) de cette clé intermédiaire K_{Gp}. La licence Lᵢ comporte en outre une donnée temporelle DSᵢ qui permet de déterminer si la date limite D_{Gp} pour transmettre au serveur 2 la requête de droit d'accès a changé, c'est-à-dire si cette date limite a été avancée ou, au contraire, retardée. De plus, la donnée temporelle DSᵢ permet également de modifier l'échéance DRP en réponse à ce changement de date limite D_{Gp}.

Ici, la donnée temporelle DSᵢ est une durée restant avant que ne soit atteinte une date limite D_{Gp}. La date limite D_{Gp} est la date avant laquelle le terminal doit transmettre, au serveur 2, une requête de droit d'accès pour pouvoir obtenir la licence Lₚ₊₁ avant de commencer à recevoir le bloc Gₚ₊₁. La licence Lₚ₊₁ comporte le droit d'accès nécessaire pour accéder à tout segment du bloc suivant Gₚ₊₁. La date limite est donc une date antérieure au début de la transmission du bloc Gₚ₊₁ et, généralement postérieure à la date de début de la transmission du bloc Gₚ. Typiquement, la date limite est égale à la date planifiée pour débuter la transmission du bloc Gₚ₊₁ moins une marge ΔDL de sécurité prédéterminée.

Dans ce mode de réalisation, la donnée DSᵢ est liée à la date limite D_{Gp} par la relation suivante : D_{Gp} = Deb_{Si} + DSᵢ, où Deb_{Si} est égale à la date de début de la réception du segment Sᵢ.

La donnée temporelle DSᵢ est typiquement calculée, par la tête 1, en fonction de la durée de jeu d'un segment par le terminal, également appelée cryptopériode, et du nombre de segments restants avant la fin du bloc Gₚ courant de segments. Elle est par exemple exprimée en secondes ou en nombre de cryptopériodes. Ici, sa valeur est comptée en prenant comme origine des temps la date Deb_{Si} de début de la réception du segment Sᵢ. Ainsi, tant que la date limite D_{Gp} n'est pas changée, la donnée temporelle DSᵢ diminue de la durée d'une cryptopériode à chaque envoi d'un nouveau segment du bloc Gp. Dans le cas particulier où la donnée temporelle DSᵢ est comprise entre zéro et un seuil ΔTc positif ou nul , égale à zéro, ou négative, la date limite D_{Gp} est, respectivement, dite imminente, égale à la date courante, ou révolue. Par exemple, ΔTc est égal à nxΔt, où :
- Δt est la durée moyenne qui s'écoule entre l'instant où le terminal 4 envoie une requête de droit d'accès et l'instant où, en réponse, il reçoit la licence Lₚ₊₁, et
- n est un nombre prédéterminé supérieur ou égal à 1 et, généralement, inférieur à 2 ou 3. Ici, n est égal à un.Ici, dans ce cas où la date limite D_{Gp} est imminente, égale à la date courante, ou révolue, la tête 1 affecte pour valeur, à la donnée temporelle DSᵢ, un code préenregistré. Par exemple, le code préenregistré a pour valeur zéro.

La figure 3 représente une licence Lₚ de terminal. Cette licence comporte un droit 52 d'accès. Le droit 52 comporte la clé K_{Gp} ou un cryptogramme de cette clé. La licence Lₚ comporte aussi l'identifiant Id(K_{Gp}) de la clé K_{Gp}. Enfin, la licence Lₚ peut comporter une donnée temporelle 54, qui permet de calculer une date limite initiale pour transmettre au serveur 2 la requête de droit d'accès. Par exemple, cette donnée temporelle 54 est une date calculée et initialement utilisée comme dans l'art antérieur décrit plus haut. Elle n'est donc plus modifiable une fois que la licence Lₚ a été reçue et traitée par le terminal 4, sans transmission, par le serveur 2, d'une nouvelle licence au même terminal.

La figure 4 représente un flux 6 transmis par la tête 1 vers tous les terminaux. Le flux 6 comporte plusieurs blocs de segments de contenu multimédia. Par exemple, le flux 6 comporte plus de deux, dix ou cent blocs de segments. Ici, on suppose que tous ces blocs sont structurellement identiques et diffèrent les uns des autres uniquement par le contenu encodé dans chacun des segments. En particulier, tous les blocs comportent le même nombre de segments. Pour simplifier la figure 4, seul un bloc Gₚ a été représenté, et va maintenant être décrit plus en détail.

Le bloc Gₚ comporte une pluralité de segments. Typiquement, le bloc Gₚ comporte plus de dix ou cent segments successifs. Le bloc Gₚ comporte seulement une partie restreinte de l'ensemble des segments dont la concaténation forme la totalité du contenu multimédia diffusé. Seuls trois segments Sᵢ, Sᵢ₊₁ et Sᵢ₊₂ ont été représentés sur la figure 4. Ici, tous ces segments sont structurellement identiques et diffèrent les uns des autres uniquement par les informations encodées dans chacun d'eux.

Au segment Sᵢ est associée la licence intermédiaire Lᵢ, transmise conjointement à ce segment dans le flux 6. Ici, cette association est réalisée par synchronisation temporelle du segment Sᵢ et de la licence intermédiaire Lᵢ dans le flux. Ici, cette synchronisation est elle-même réalisée par l'adjacence du segment Sᵢ et de la licence intermédiaire Lᵢ dans le flux, et, le moment venu, par leur transmission conjointe. Sur la figure 4, les licences intermédiaires associées aux segments Sᵢ₊₁ et Sᵢ₊₂ portent, respectivement, les références numériques Lᵢ₊₁ et Lᵢ₊₂.

Le fonctionnement du système de la figure 1 va maintenant être décrit en référence au procédé de la figure 5.

Le procédé débute par une phase 100 de conditionnement de contenu multimédia. Au début de cette phase 100, lors d'une étape 102, la tête 1 reçoit du terminal 4 une requête visant à obtenir le contenu. Cette requête contient notamment un identifiant d'une clé K_{T} de terminal. La clé K_{T} est ici unique pour chaque terminal. De façon connue de l'homme du métier, la clé K_{T} a été obtenue par le terminal lors de sa phase de fabrication ou de personnalisation. Elle est ensuite obtenue par la tête 1 lors d'une phase d'enregistrement du terminal avant la mise en oeuvre du procédé de la figure 5.

Puis, lors d'une étape 104, la tête 1 acquiert un contenu multimédia temporel en clair, l'encode, puis le protège au moyen d'un système de protection de contenus multimédia.

Afin de le protéger, la tête 1 scinde le contenu multimédia encodé en plusieurs segments Sᵢ successifs de contenu. Ces segments Sᵢ sont ordonnés temporellement les uns par rapport aux autres, et leur suite complète constitue le contenu multimédia. Dans la suite de cette description, l'indice « i » est le numéro d'ordre du segment Sᵢ dans cette suite temporelle de segments.

La tête 1 assure ensuite la protection individuelle, par un système de gestion de droits numériques, de chacun des segments Sᵢ. A ce titre, elle chiffre chaque segment Sᵢ avec une clé spécifique Kₛᵢ. La clé Kₛᵢ n'est pas utilisée pour chiffrer un autre segment de la même suite de segments.

Ensuite, la tête 1 constitue des blocs Gₚ de segments successifs. L'indice « p » est le numéro d'ordre du bloc dans la suite de blocs successifs ainsi constituée. Ici, la tête 1 fixe à cet effet le nombre de segments contenus dans chaque bloc. Pour chaque bloc comportant ce nombre de segments successifs, elle génère ensuite une clé intermédiaire K_{Gp}. Puis elle chiffre, avec la clé K_{Gp}, chaque clé Kₛᵢ associée à un segment Sᵢ de ce bloc Gₚ. Elle obtient donc, pour chaque segment Sᵢ du bloc Gₚ, le cryptogramme (Kₛᵢ)*K_{Gp}. La tête 1 insère ensuite l'identifiant Id(K_{Gp}) de la clé K_{Gp} et le cryptogramme (Kₛᵢ)*K_{Gp} dans la licence Lᵢ qu'elle associe à ce segment Sᵢ comme décrit en référence à la figure 4.

La tête 1 poursuit ensuite par une phase 110 d'émission du contenu multimédia conditionné lors de la phase 100. Plus précisément, la phase 110 débute par une étape 112 lors de laquelle la tête 1 chiffre chaque clé K_{Gp}, avec la clé K_{T} de terminal, pour obtenir le cryptogramme (K_{Gp})*K_{T}. Puis pour chaque bloc Gₚ, elle insère, en tant que droit 52 d'accès à ce bloc, le cryptogramme (K_{Gp})*K_{T} dans la licence Lₚ de terminal destinée au terminal 4. L'identifiant Id(K_{Gp}) de la clé K_{Gp} est en outre inséré dans la licence Lₚ. L'identifiant Id(K_{Gp}) étant également contenu dans la licence Lᵢ associée à tout segment Sᵢ du bloc Gₚ, la licence Lₚ est ainsi également associée à chacun des segments Sᵢ, et donc au bloc Gₚ.

Lors de cette étape 112, optionnellement, la tête 1 insère, dans la licence Lₚ, la donnée temporelle 54. On notera que le procédé décrit par la suite fonctionne même si la donnée 54 n'est pas insérée dans la licence Lₚ.

Ensuite, lors d'une étape 114, la tête 1 associe à chacun des segments Sᵢ sa donnée temporelle DSᵢ. Puis, elle insère cette donnée temporelle DSᵢ dans la licence Lᵢ associée au segment Sᵢ. La donnée temporelle DSᵢ est de préférence insérée, protégée en intégrité, dans la licence Lᵢ. Ainsi, ici, une donnée temporelle DSᵢ respective est associée à chaque segment Sᵢ du bloc Gₚ.

La tête 1 génère ainsi de proche en proche un flux 6 comportant chacun des segments Sᵢ du bloc Gₚ et, pour chaque segment Sᵢ, sa licence Lᵢ associée qui comporte elle-même la donnée temporelle DSᵢ.

La tête 1 transmet enfin la licence Lₚ construite pour le terminal 4 au serveur 2 qui l'enregistre.

Ensuite, lors d'une étape 116, le serveur 2 transmet la licence Lₚ au terminal 4 par l'intermédiaire de la liaison 34. Typiquement, cette transmission a lieu en réponse à la réception par le serveur 2, sur la liaison 34, d'une requête de droit d'accès transmise par le terminal 4.

Lors d'une étape 118, la tête 1 transmet, par l'intermédiaire de la liaison 32, le flux 6 au terminal 4. Les étapes 116 et 118 sont synchronisées par le procédé selon l'invention de telle sorte que l'étape 116 précède l'étape 118 de façon que la licence Lₚ soit reçue et traitée par le terminal 4 avant que le bloc Gₚ ne soit joué.

Le procédé se poursuit par une phase 120 de réception. Lors de la phase 120, le terminal reçoit, lors d'une étape 122, la licence Lₚ, et, lors d'une étape 124, le flux 6. Du fait de la synchronisation des étapes 116 et 118, les étapes 122 et 124 sont elles-mêmes synchronisées de façon que l'étape 122 précède l'étape 124.

Lors de l'étape 124, le terminal reçoit l'un après l'autre chacun des segments Sᵢ du bloc Gₚ et la licence Lᵢ associée.

Ensuite, le terminal engage une phase 130 de jeu du contenu. Lors de cette phase, il procède, successivement pour chacun des segments Sᵢ du flux 6 reçu, à la mise en oeuvre des étapes 132 à 148.

Lors de l'étape 132, le terminal extrait le segment Sᵢ, et sa licence Lᵢ du flux 6.

Lors de l'étape 134, le terminal 4 extrait de la licence Lᵢ l'identifiant Id(K_{Gp}) de la clé K_{Gp}. Puis, le terminal 4 recherche la licence Lₚ qui comporte le même identifiant Id(K_{Gp}).

Ensuite, si le droit 52 de la licence Lₚ trouvée n'en a pas déjà été extrait depuis le début de la phase de jeu, alors le terminal 4 l'en extrait.

Lors de l'étape 136, le terminal 4 utilise le droit 52 pour autoriser et, sinon, interdire l'accès au segment Sᵢ. Dans ce mode de réalisation, à cet effet, le terminal 4 extrait du droit 52 le cryptogramme (K_{Gp})*K_{T}. Puis, le terminal 4 déchiffre le cryptogramme (K_{Gp})*K_{T} avec sa clé K_{T}. Il obtient ainsi la clé K_{Gp} en clair. Le terminal 4 déchiffre alors le cryptogramme (Kₛᵢ)*K_{Gp} avec cette clé K_{Gp}. Il obtient ainsi la clé Kₛᵢ en clair. Enfin, le terminal 4 déchiffre le cryptogramme du segment Sᵢ avec cette clé Kₛᵢ et obtient le segment Sᵢ en clair. Le segment Sᵢ en clair est transmis par le terminal 4 à un appareil multimédia qui le joue. Dans ce mode de réalisation, l'accès au segment Sᵢ est interdit si le droit 52 ne contient pas de cryptogramme (K_{Gp})*K_{T} ou un cryptogramme erroné qui ne peut pas être correctement déchiffré avec la clé K_{T}. L'accès au segment Sᵢ peut aussi être interdit si le droit 52 comporte une règle d'accès qui décrit des utilisations du contenu multimédia protégé que le terminal 4 est autorisé à faire, et parmi lesquelles ne figure pas le jeu par un appareil multimédia requis par le terminal 4.

Parallèlement aux étapes 134 et 136, si la licence Lₚ₊₁ de terminal n'a pas déjà été obtenue par le terminal 4, le terminal met en oeuvre des étapes 138 à 148.

Lors de l'étape 138, le terminal 4 extrait de la licence Lᵢ la donnée temporelle DSᵢ associée au segment Sᵢ.

Puis, lors de l'étape 140, le terminal 4 compare la donnée temporelle DSᵢ au code préenregistré. Si la valeur de la donnée temporelle DSᵢ est égale au code préenregistré, alors le terminal procède immédiatement à l'étape 148. Sinon, le terminal met en oeuvre l'étape 142.

Lors de l'étape 148, le terminal 4 transmet immédiatement, au serveur 2 une requête de droits d'accès. En réponse, le serveur 2 réalise une nouvelle mise en oeuvre de l'étape 116, pour transmettre au terminal la licence Lₚ₊₁. La licence Lₚ₊₁ comporte le droit d'accès nécessaire pour accéder à tout segment du bloc Gₚ₊₁.

Ainsi, lorsque, lors de l'étape 140, la donnée temporelle DSᵢ est égale au code préenregistré, le terminal 4 déclenche la transmission de la requête de droit d'accès indépendamment de l'échéance de renouvellement prédéterminée DRP enregistrée dans sa mémoire 46.

Lors de l'étape 142, le terminal détermine si la donnée temporelle DSᵢ satisfait l'une au moins des conditions suivantes :
- Condition 1) : DSᵢ > DSᵢ₋₁ + ΔT₁, et
- Condition 2) : DSᵢ < DSᵢ₋₁ - ΔT₂,
   où ΔT₁ et ΔT₂ sont des constantes prédéfinies nulles ou positives.

La condition 1) est vérifiée dans les cas où la date limite D_{Gp} pour transmettre au serveur 2 la requête de droit d'accès a été repoussée d'au moins ΔT₁. Par exemple, ici ΔT₁ = 0.

La condition 2) est vérifiée dans les cas où la date limite D_{Gp} pour transmettre au serveur 2 la requête de droit d'accès a été avancée d'au moins ΔT₂.

Par exemple, ici ΔT₂ est égal à un multiple strictement positif de la durée d'une cryptopériode. Par exemple ΔT₂ est alors supérieur à 2 ou 3 fois la durée d'une cryptopériode.

Si l'une des conditions 1) et 2) est satisfaite, le terminal met ensuite en oeuvre les étapes 144 puis 146. Dans le cas contraire, il procède directement à l'étape 146.

Lors de l'étape 144, le terminal modifie l'échéance de renouvellement DRP actuelle en fonction de la donnée temporelle DSᵢ reçue pour obtenir une nouvelle échéance de renouvellement. Cette nouvelle échéance DRP permet au terminal de décider, en fonction de sa valeur et à un instant donné antérieur ou égal à la date limite modifiée, de transmettre au serveur de droits d'accès une requête de droits d'accès.

Pour cela, ici, la nouvelle échéance de renouvellement est tirée aléatoirement, ou pseudo-aléatoirement, dans l'intervalle compris entre 0 et la dernière donnée temporelle DSᵢ reçue. Cette nouvelle échéance de renouvellement DRP remplace alors la précédente échéance de renouvellement dans la mémoire 46.

Lors de l'étape 146, le terminal 4 détermine si l'échéance DRP enregistrée dans sa mémoire est atteinte. Pour cela, il compare l'échéance de renouvellement DRP enregistrée dans sa mémoire 46 à un seuil ΔTd positif ou nul prédéterminé. Si l'échéance DRP est négative, nulle, ou comprise entre 0 et ΔTd, le terminal 4 met alors en oeuvre l'étape 148. Dans le cas contraire, le terminal 4 inhibe la mise en oeuvre de l'étape 148, mémorise DSᵢ en lieu et place de DSᵢ₋₁ comme dernière donnée temporelle reçue, et met à jour l'échéance DRP. Ici la mise à jour de l'échéance DRP consiste à décrémenter l'échéance DRP de la durée DSᵢ₋₁ - DSᵢ. Ici, cette durée est la durée d'une cryptopériode. Ensuite, l'échéance DRP mise à jour est enregistrée dans la mémoire 46 à la place de l'ancienne échéance. Par exemple, ΔTd est égal à nxΔt, où :
- Δt est la durée moyenne qui s'écoule entre l'instant où le terminal 4 envoie une requête de droit d'accès et l'instant où, en réponse, il reçoit la licence Lₚ₊₁, et
- n est un nombre prédéterminé supérieur ou égal à 1 et, généralement, inférieur à 2 ou 3. Ici, n est égal à un.
Par exemple, ΔTd est égal à ΔTc.

De nombreux autres modes de réalisation de l'invention sont possibles. Par exemple, le contenu est fourni protégé par un système de gestion de droits numériques sans toutefois être chiffré. Le cryptogramme (K_{Si})*K_{Gp} ne figure alors pas nécessairement parmi les données d'accès insérées dans la licence Lᵢ.

Dans un autre mode de réalisation, le contenu multimédia est fourni protégé par un système d'accès conditionnel, ou CAS, pour Conditional Access System. La terminologie du domaine des systèmes d'accès conditionnel est alors utilisée. Le lecteur intéressé pourra par exemple en trouver une présentation plus complète dans le document : « Functional Model of a Conditional Access System », EBU Review, Technical European Broadcasting Union, Bruxels, BE, N° 266, le 21 décembre 1995. Un segment est alors par exemple une cryptopériode, une licence de terminal Lₚ un EMM (Entitlement Management Message), et la licence intermédiaire Lᵢ un ECM (Entitlement Control Message). La donnée temporelle DSᵢ est alors typiquement insérée dans un ECM.

Dans un autre mode de réalisation, le contenu est fourni, par le système, protégé par tout autre type de système de protection de contenus, tel par exemple qu'un système de protection de données plus classique ne réalisant pas de gestion de droits d'accès. Le procédé revendiqué s'applique alors à la fourniture des messages nécessaires à l'acheminement des clés de déchiffrement, par exemple.

Dans un autre mode de réalisation, tous les segments d'un bloc de segments de contenu ne se suivent pas immédiatement dans le déroulement temporel du contenu. Certains de ces segments y sont alors séparés par des segments n'appartenant pas au bloc considéré.

En variante, un terminal partage avec au moins un autre terminal, sa clé K_{T} de déchiffrement.

En variante, aucun code pré-enregistré n'est affecté à la donnée temporelle DSᵢ si la date limite est imminente, égale à la date courante ou révolue. Dans ce cas, lors de l'étape 140, la donnée temporelle DSᵢ est comparée au seuil ΔTc. Si la donnée temporelle DSᵢ est inférieure à ce seuil, alors l'étape 148 est directement exécutée. Dans le cas contraire, le procédé se poursuit par l'exécution de l'étape 142. Dans ce mode de réalisation, il n'est pas nécessaire d'utiliser un code pré-enregistré.

En variante, l'échéance DRP est la prochaine date à laquelle le terminal 4 déclenchera automatiquement la transmission d'une requête de droit d'accès au serveur 2. Dans ce cas, lors de l'étape 146, le terminal 4 compare l'échéance DRP enregistrée dans sa mémoire à la date courante. Si l'échéance DRP est révolue, égale à la date courante, ou imminente, alors le terminal 4 met en oeuvre l'étape 148. Dans le cas contraire, le terminal 4 inhibe la mise en oeuvre de l'étape 148. On qualifie d'imminente une échéance DRP lorsqu'elle est comprise entre la date courante Dc et Dc + ΔTd, où ΔTd est le seuil précédemment défini.

Dans ce cas, une date courante est obtenue par le terminal 4 par tout moyen. Par exemple, auprès d'un serveur de dates auquel le terminal 4 est relié par l'intermédiaire du réseau 3, auprès d'une horloge intégrée au terminal 4, ou calculée à partir d'une grandeur qui représente le temps qui s'écoule et qui est transmise dans le flux 6. De plus, dans cette variante, l'étape 144 consiste, par exemple, à tirer aléatoirement ou pseudo-aléatoirement une nouvelle échéance DRP dans la plage de dates comprise entre la date courante et la date limite changée D_{Gp}. La date limite changée D_{Gp} est par exemple calculée à l'aide de la relation suivante : D_{Gp} = Deb_{Si} + DSᵢ.

En variante, le réseau 3 comporte un premier sous-réseau support de la liaison point-à-multipoints 32 et un second sous-réseau support de la liaison point-à-point 34. Par exemple, le premier sous-réseau est un réseau de transmission satellitaire et le second sous-réseau est le réseau Internet.

En variante, le serveur 2 est intégré à l'intérieur de la tête 1.

En variante, chaque licence Lᵢ ne comporte pas systématiquement une donnée temporelle DSᵢ. Par exemple, parmi les licences Lᵢ associées aux segments d'un même bloc Gₚ, seule moins d'une sur deux ou moins d'une sur cinq, ou moins d'une sur dix, ou moins d'une sur cinquante comporte une donnée temporelle DSᵢ. Les seuls segments Sᵢ du bloc Gₚ qui sont associés à une donnée temporelle DSᵢ forment une liste de segments du bloc Gₚ. Dans ce cas, les étapes 138 à 148 sont exécutées uniquement pour les segments de cette liste. Alors, plus l'effectif de cette liste est important, et plus sont nombreuses les opportunités de modifier l'échéance de renouvellement DRP, et plus le procédé est donc souple. Par ailleurs, plus les segments de la liste sont régulièrement répartis dans le bloc Gₚ, et plus les opportunités de modifier l'échéance de renouvellement le sont elles-mêmes. Cela rend également le procédé plus souple.

Dans un dernier exemple, une donnée temporelle DSᵢ n'est insérée qu'au besoin dans la licence Lᵢ, c'est-à-dire lorsque l'échéance de renouvellement doit être modifiée. Alors, par exemple, une seule des licences Lᵢ comporte une donnée temporelle DSᵢ

En variante, la donnée temporelle DSᵢ est une date. Cette date est par exemple la date limite D_{Gp} à laquelle le terminal doit transmettre, au serveur 2, une requête de droit d'accès en vue d'obtenir la licence Lₚ₊₁ avant de commencer à recevoir le bloc Gₚ₊₁. La donnée temporelle DSᵢ peut aussi être une date DLᵢ telle que la nouvelle date limite est calculée de la façon suivante : D_{Gp} = DLᵢ - ΔTl, où ΔTl est une durée prédéterminée positive ou nulle. Par exemple, ΔTl est égale à ΔTc.

Dans ce cas, lors de l'étape 144, la nouvelle échéance de renouvellement est tirée aléatoirement, ou pseudo-aléatoirement, dans l'intervalle compris entre la date courante Dc et la donnée temporelle DSᵢ reçue. Alternativement, la nouvelle échéance de renouvellement DRP est systématiquement prise égale à la donnée temporelle DSᵢ reçue. Dans un autre exemple, la nouvelle échéance de renouvellement DRP est fixée dans un sous-intervalle de l'intervalle compris entre la date courante Dc et la donnée temporelle DSᵢ reçue. Par exemple, ce sous-intervalle est déterminé en fonction d'un identifiant du terminal. Par exemple, la nouvelle échéance de renouvellement DRP est tirée aléatoirement, ou pseudo-aléatoirement, dans ce sous-intervalle. Alternativement, la nouvelle échéance de renouvellement est prise systématiquement égale à la borne supérieure de ce sous-intervalle.

En variante, la donnée temporelle DSᵢ associée au segment Sᵢ est insérée dans un message ou une structure de données autre que la licence Lᵢ associée au même segment. Toutefois, ce message ou cette structure de données autre est transmis conjointement au segment Sᵢ et à la licence Lᵢ. Par exemple, la donnée temporelle est adjacente à chaque segment transmis dans le flux mais ne fait pas partie de la structure de données formant une licence Lᵢ.

En variante, chaque bloc comporte un seul segment. Dans ce mode de réalisation particulier, l'utilisation de la clé K_{Gp} peut être omise. La licence Lᵢ ne comporte alors pas le cryptogramme (K_{Si})*K_{Gp} et le droit d'accès 52 de la licence Lₚ comporte le cryptogramme (K_{Si})*K_{T} à la place du cryptogramme (K_{Gp})*K_{T}. L'homme du métier sait adapter le procédé de la figure 5 à ce cas particulier. Plus précisément, lors de l'étape 112, la tête 1 chiffre chaque clé Kₛᵢ, avec la clé K_{T}, pour obtenir le cryptogramme (Kₛᵢ)*K_{T}. Puis pour chaque bloc Gₚ, elle insère, en tant que droit 52 d'accès à ce bloc, le cryptogramme (Kₛᵢ)*K_{T} dans la licence Lₚ destinée au terminal 4. L'identifiant Id(K_{Gp}) de la clé K_{Gp} est également inséré dans la licence Lₚ. L'identifiant Id(K_{Gp}) étant également contenu dans la licence Lᵢ associée à tout segment Sᵢ du bloc Gₚ, la licence Lₚ est ainsi également associée à chacun des segments Sᵢ, et donc au bloc Gₚ.

Dans un autre mode de réalisation, tous les blocs ne comportent pas le même nombre de segments.

En variante, lors de l'étape 112, la tête 1 associe en outre au bloc Gₚ au moins une règle d'accès, qui décrit des usages du contenu multimédia que le terminal est autorisé à faire, ou un identifiant de cette règle d'accès. Cette règle d'accès, ou cet identifiant, conjointement avec le cryptogramme (Kₛᵢ)*K_{T}, est inséré, en tant que droit 52 d'accès à ce bloc, dans la licence Lₚ de terminal destinée au terminal 4. Dans ce cas, lors de l'étape 134, le terminal 4 extrait en plus cette règle d'accès du droit 52 de la licence Lₚ trouvée, puis exploite cette règle d'accès pour autoriser et, en alternance, inhiber, l'accès de ce terminal au segment Sᵢ, c'est-à-dire la mise en oeuvre de l'étape 136. En variante, dans le même cas, le terminal 4 exploite aussi cette règle d'accès pour autoriser, et en alternance inhiber, la mise en oeuvre de l'étape 138.

Les conditions 1) et 2) utilisées lors de l'étape 142 peuvent aussi s'écrire, respectivement, ou DSᵢ ≥ DSᵢ₋₁ + ΔT₁ et DSᵢ ≤ DSᵢ₋₁ - ΔT₂.

ΔT₁ peut être nul. ΔT₂ peut être égal à un multiple strictement positif de la cryptopériode. Par exemple ΔT₂ est alors supérieur à 3, 10, 30, 60, 100, 200 ou 800 fois la durée d'une cryptopériode. Ce dernier cas est par exemple utilisé lorsque seule moins d'un segment Sᵢ sur deux ou moins d'un sur cinq, ou moins d'un sur dix, ou moins d'un sur cinquante, est associé à une donnée temporelle DSᵢ.

En variante, l'étape 142 est omise. Dans ce cas, si lors de l'étape 140 le terminal détermine que la donnée temporelle DSᵢ est différente du code pré-enregistré, alors le procédé se poursuit directement et systématiquement par l'étape 144. Dès lors, la mise à jour de l'échéance DRP lors de l'étape 146 peut être omise.

En variante, lors de l'étape 144, la nouvelle échéance de renouvellement DRP est tirée aléatoirement ou pseudo-aléatoirement dans un intervalle compris entre DSᵢ - ΔTe et DSᵢ, où ΔTe est un seuil positif. Par exemple, ΔTe est égal à 1, 2, 5, 10, 50, 100 ou 500 fois la durée d'une cryptopériode.

la nouvelle échéance de renouvellement DRP est systématiquement prise égale à la donnée temporelle DSᵢ reçue. Dans un autre exemple, la nouvelle échéance de renouvellement DRP est fixée dans un sous-intervalle de l'intervalle compris entre 0 et la donnée temporelle DSᵢ reçue. Par exemple, ce sous-intervalle est déterminé en fonction d'un identifiant du terminal. Par exemple, la nouvelle échéance de renouvellement DRP est tirée aléatoirement ou pseudo-aléatoirement, dans ce sous-intervalle. Alternativement, la nouvelle échéance de renouvellement est prise systématiquement égale à la borne supérieure de ce sous-intervalle.

## Revendications

1. Procédé de fourniture, par une tête de réseau, d'un contenu multimédia protégé par un système de protection de contenus multimédia, à des terminaux mécaniquement indépendants les uns des autres et raccordés à un même serveur de droits d'accès par l'intermédiaire d'un réseau grande distance de transmission d'informations, procédé dans lequel :
lors d'une phase (110) d'émission, la tête de réseau :
a) associe (112) respectivement, à un premier et un deuxième blocs (Gₚ) de segments (Sᵢ) de contenu multimédia, un premier et un deuxième droits (52) d'accès nécessaires à un terminal pour accéder à tout segment de ce premier ou de ce deuxième bloc en vue de le jouer, chacun de ces segments comportant au moins une suite de groupes d'images vidéo ou de trames audio, ce premier et ce deuxième blocs comportant chacun un ou plusieurs segments, et ce premier bloc étant suivi de ce deuxième bloc dans le contenu multimédia protégé,
b) transmet (116, 118) au terminal, par l'intermédiaire d'une liaison (34) point-à-point, une première licence (Lₚ) comportant le premier droit (52) d'accès, et transmet vers chacun des terminaux, par l'intermédiaire d'une liaison (32) point-à-multipoints, un flux (6) comportant chaque segment (Sᵢ) du premier bloc (Gₚ),
lors d'une phase (120) de réception, le terminal :
c) reçoit (122) la première licence,
d) reçoit (124) le flux, puis,
lors d'une phase (130) de jeu, le terminal :
e) extrait (134) le premier droit d'accès de la première licence, puis utilise (136) ce premier droit d'accès extrait pour autoriser et, en alternance, inhiber, l'accès de ce terminal aux segments du premier bloc, ou pour déchiffrer les segments du premier bloc,
f) lorsqu'une échéance de renouvellement prédéterminée est atteinte, transmet (148), au serveur de droits d'accès, une requête de droits d'accès,
g) en réponse à la requête de droits d'accès, le serveur de droits d'accès transmet (116), au terminal, une deuxième licence (Lₚ₊₁) comportant le deuxième droit d'accès, procédé **caractérisé en ce que** :
- lors de l'étape a), la tête de réseau associe à chaque segment d'une liste d'au moins un segment du premier bloc, une donnée temporelle (DSᵢ) qui permet de déterminer si une date limite (D_{Gp}) pour transmettre au serveur de droit d'accès la requête de droit d'accès a changé,
- lors de l'étape b), la tête de réseau transmet (118) au terminal, conjointement avec chaque segment de la liste de segments du premier bloc, sa donnée temporelle associée,
- lors de l'étape c), le terminal reçoit (124), conjointement avec chaque segment de la liste de segments du premier bloc, sa donnée temporelle associée, puis,
- lors d'une étape h), antérieure à l'étape f), modifie (144) l'échéance de renouvellement prédéterminée (DRP) en fonction de la dernière donnée temporelle reçue pour obtenir une nouvelle échéance de renouvellement prédéterminée qui permet au terminal de décider, en fonction de sa valeur et à un instant donné antérieur ou égal à la date limite (D_{Gp}) qui a changé, de transmettre au serveur de droits d'accès une requête de droits d'accès.

2. Procédé selon la revendication 1, dans lequel tout droit d'accès comporte au moins une donnée d'accès qui appartient au groupe composé :
- d'une règle d'accès, qui décrit des usages du contenu multimédia que le terminal est autorisé à faire,
- d'un identifiant de cette règle d'accès,
- d'une adresse de cette règle d'accès,
- d'une clé (K_{Gp}) cryptographique nécessaire pour accéder à tout segment du bloc (Gₚ) de contenu multimédia auquel est associé le droit d'accès,
- d'un identifiant de cette clé cryptographique,
- d'une adresse de cette clé cryptographique, et
- d'une valeur d'initialisation qui permet de calculer cette clé cryptographique.

3. Procédé d'émission, par une tête de réseau, pour la mise en oeuvre du procédé de la revendication 1, d'un contenu multimédia protégé, dans lequel la tête de réseau :
a) associe (112) respectivement, à un premier et un deuxième blocs (Gₚ) de segments (Sᵢ) de contenu multimédia, un premier et un deuxième droits (52) d'accès nécessaires à un terminal pour accéder à tout segment de ce premier ou de ce deuxième bloc en vue de le jouer, chacun de ces segments comportant au moins une suite de groupes d'images vidéo ou de trames audio, ce premier et ce deuxième blocs comportant chacun un ou plusieurs segments, et ce premier bloc étant suivi de ce deuxième bloc dans le contenu multimédia protégé,
b) transmet (116,118) au terminal une première licence (Lₚ) comportant le premier droit d'accès, et un flux comportant chaque segment du premier bloc,
procédé **caractérisé en ce que** la tête de réseau :
- lors de l'étape a), associe à chaque segment d'une liste d'au moins un segment du premier bloc, une donnée temporelle (DSᵢ) qui permet de déterminer si une date limite (D_{Gp}) pour transmettre au serveur de droit d'accès la requête de droit d'accès a changé,
- lors de l'étape b), transmet (118) au terminal, conjointement avec chaque segment de la liste de segments du premier bloc, sa donnée temporelle associée.

4. Procédé d'obtention, par un terminal, pour la mise en oeuvre du procédé de la revendication 1, d'un contenu multimédia protégé, dans lequel le terminal :
lors de la phase (120) de réception :
c) reçoit (122) la première licence,
d) reçoit (124) le flux, puis,
lors de la phase (130) de jeu :
e) extrait (134) le premier droit d'accès de la première licence puis utilise (136) ce premier droit d'accès extrait afin d'accéder aux segments du premier bloc, au moins pour autoriser et, en alternance, pour inhiber, l'accès de ce terminal aux segments du premier bloc, ou pour déchiffrer les segments du premier bloc,
f) à une échéance de renouvellement prédéterminée, transmet (148), au serveur de droits d'accès, une requête de droits d'accès,
g) en réponse à la requête de droits d'accès, le serveur de droits d'accès transmet (116), au terminal, une deuxième licence (Lₚ₊₁) comportant le deuxième droit d'accès, procédé **caractérisé en ce que** :
lors de la phase (120) de réception, le terminal :
- lors de l'étape c), reçoit (124), conjointement avec chaque segment de la liste de segments du premier bloc, sa donnée temporelle associée, puis,
- lors d'une étape h) antérieure à l'étape f), modifie (144) l'échéance de renouvellement prédéterminée (DRP) en fonction de la dernière donnée temporelle reçue pour obtenir une nouvelle échéance de renouvellement prédéterminée qui permet au terminal de décider, en fonction de sa valeur et à un instant donné antérieur ou égal à la date limite (D_{Gp}) qui a changé, de transmettre au serveur de droits d'accès une requête de droits d'accès.

5. Procédé d'obtention selon la revendication 4, dans lequel, lors de l'étape h), le terminal :
- teste (142) l'une des conditions DSₜ > DSₜ₋₁ + ΔT₁ et DSₜ ≥ DSₜ₋₁ + ΔT₁, où DSₜ est la dernière donnée temporelle reçue, DSₜ₋₁ est l'avant dernière donnée temporelle reçue, et ΔT₁ est un premier seuil prédéterminé positif ou nul,
- si la condition testée est vérifiée, déclenche la modification (144) de l'échéance de renouvellement prédéterminée (DRP) et, sinon, ne déclenche pas cette modification de l'échéance de renouvellement prédéterminée.

6. Procédé d'obtention selon la revendication 4, dans lequel, lors de l'étape h), le terminal :
- teste (142) l'une des conditions DSₜ < DSₜ₋₁ - ΔT₂ et DSₜ ≤ DSₜ₋₁ - ΔT₂, où DSₜ est la dernière donnée temporelle reçue, DSₜ₋₁ est l'avant dernière donnée temporelle reçue, et ΔT₂ est un deuxième seuil prédéterminé positif ou nul,
- si la condition testée est vérifiée, déclenche la modification (144) de l'échéance de renouvellement prédéterminée (DRP) et, sinon, ne déclenche pas cette modification de l'échéance de renouvellement prédéterminée.

7. Procédé d'obtention selon la revendication 4, dans lequel, lors de l'étape h), le terminal modifie (144) l'échéance de renouvellement prédéterminée (DRP) en lui affectant une valeur calculée en fonction de la dernière donnée temporelle reçue et au moyen d'une fonction apte à répartir de façon uniforme les échéances de renouvellement prédéterminées des terminaux, dans un intervalle borné dont la borne supérieure permet au terminal d'exécuter l'étape f) à un instant donné antérieur ou égal à la date limite (D_{Gp}) qui a changé, cette répartition étant uniforme en ce que les échéances de renouvellement sont équiprobables dans tout sous-intervalle d'amplitude donnée compris dans cet intervalle.

8. Procédé d'obtention selon la revendication 4, dans lequel, à l'étape h), le terminal compare (140) la dernière donnée temporelle reçue à un code préenregistré, puis si la dernière donnée temporelle est égale à ce code préenregistré, le terminal procède immédiatement à la mise en oeuvre de l'étape f) indépendamment de l'échéance de renouvellement prédéterminée (DRP), sans, au préalable, modifier l'échéance de renouvellement prédéterminée en fonction de la dernière donnée temporelle reçue, et, dans le cas contraire, le terminal modifie (144) l'échéance de renouvellement prédéterminée en fonction de la dernière donnée temporelle reçue puis procède à la mise en oeuvre de l'étape f) (146, 148) uniquement lorsque l'échéance de renouvellement prédéterminée est atteinte.

9. Support d'enregistrement d'informations (16, 46), **caractérisé en ce qu'**il comporte des instructions pour la mise en oeuvre d'un procédé conforme à l'une quelconque des revendications précédentes, lorsque ces instructions sont exécutées par un calculateur électronique (14, 44).

10. Tête (1) de réseau pour la mise en oeuvre d'un procédé d'émission d'un contenu multimédia protégé conforme à la revendication 3, dans lequel la tête de réseau est apte :
a) à associer respectivement, à un premier et un deuxième blocs de segments de contenu multimédia, un premier et un deuxième droits d'accès nécessaires à un terminal (4) pour accéder à tout segment de ce premier ou de ce deuxième bloc en vue de le jouer, chacun de ces segments comportant au moins une suite de groupes d'images vidéo ou de trames audio, ce premier et ce deuxième blocs comportant chacun un ou plusieurs segments, et ce premier bloc étant suivi de ce deuxième bloc dans le contenu multimédia protégé,
b) à transmettre au terminal (4) une première licence comportant le premier droit d'accès, et un flux comportant chaque segment du premier bloc,
tête de réseau **caractérisée en ce qu'**elle comporte un calculateur électronique (14) programmé pour :
- lors de l'étape a), associer à chaque segment d'une liste d'au moins un segment du premier bloc, une donnée temporelle qui permet de déterminer si une date limite pour transmettre au serveur (2) de droit d'accès la requête de droit d'accès a changé,
- lors de l'étape b), transmettre au terminal, conjointement avec chaque segment de la liste de segments du premier bloc, sa donnée temporelle associée.

11. Terminal (4) pour la mise en oeuvre d'un procédé d'obtention d'un contenu multimédia protégé conforme à l'une quelconque des revendications 4 à 8, dans lequel le terminal est apte :
lors de la phase de réception :
c) à recevoir la première licence,
d) à recevoir le flux, puis,
lors de la phase de jeu :
e) à extraire le premier droit d'accès de la première licence, puis à utiliser ce premier droit d'accès extrait afin d'accéder aux segments du premier bloc, au moins pour autoriser et, en alternance, pour inhiber, l'accès de ce terminal aux segments du premier bloc, ou pour déchiffrer les segments du premier bloc,
f) lorsqu'une échéance de renouvellement prédéterminée est atteinte, à transmettre, au serveur (2) de droits d'accès, une requête de droits d'accès,
terminal **caractérisé en ce qu'**il comporte un calculateur électronique (44) programmé pour :
lors de la phase de réception :
- lors de l'étape c), recevoir, conjointement avec chaque segment de la liste de segments du premier bloc, sa donnée temporelle associée, puis,
- lors de l'étape h), modifier l'échéance de renouvellement prédéterminée en fonction de la dernière donnée temporelle reçue pour obtenir une nouvelle échéance de renouvellement prédéterminée qui permet au terminal de décider, en fonction de sa valeur et à un instant donné antérieur ou égal à la date limite qui a changé, de transmettre au serveur de droits d'accès une requête de droits d'accès.

## Patentansprüche

1. Verfahren zur Lieferung, durch eine Kopfstation, eines durch ein Schutzsystem von Multimedia-Inhalten geschützten Multimedia-Inhalts an Endgeräte, die mechanisch voneinander unabhängig und über ein Informationsübertragungs-Fernnetz an den gleichen Zugriffsrechte-Server angeschlossen sind, Verfahren, in dem:
während einer Sendephase (110) die Kopfstation:
a) einem ersten bzw. einem zweiten Block (Gₚ) von Multimedia-Inhaltssegmenten (Sᵢ) ein erstes und ein zweites Zugriffsrecht (52) zuordnet (122), die ein Endgerät benötigt, um auf jedes Segment dieses ersten oder dieses zweiten Blocks zuzugreifen, um es zu spielen, wobei jedes dieser Segmente mindestens eine Folge von Gruppen von Videobildern oder von Audioframes enthält, wobei dieser erste und dieser zweite Block je eines oder mehrere Segmente enthalten, und im geschützten Multimedia-Inhalt dieser zweite Block auf diesen ersten Block folgt,
b) an das Endgerät mittels einer Punkt-zu-Punkt-Verbindung (34) eine erste Lizenz (Lₚ) überträgt (116, 118), die das erste Zugriffsrecht (52) enthält, und an jedes der Endgeräte mittels einer Punkt-zu-Mehrpunkt-Verbindung (32) einen Strom (6) überträgt, der jedes Segment (Sᵢ) des ersten Blocks (Gₚ) enthält,
während einer Empfangsphase (120) das Endgerät:
c) die erste Lizenz empfängt (122),
d) den Strom empfängt (124), dann
während einer Spielphase (130) das Endgerät:
e) das erste Zugriffsrecht aus der ersten Lizenz entnimmt (134), dann dieses entnommene erste Zugriffsrecht verwendet (136), um den Zugriff dieses Endgeräts auf die Segmente des ersten Blocks abwechselnd zu erlauben und zu verbieten, oder um die Segmente des ersten Blocks zu entschlüsseln,
f) wenn eine vorbestimmte Verlängerungsfälligkeit erreicht wird, eine Zugriffsrechtanforderung an den Zugriffsrechte-Server überträgt (148),
g) der Zugriffsrechte-Server als Antwort auf die Zugriffsrechtanforderung eine zweite Lizenz (Lₚ₊₁) an das Endgerät überträgt (116), die das zweite Zugriffsrecht enthält,
wobei das Verfahren **dadurch gekennzeichnet ist, dass**:
- im Schritt a) die Kopfstation jedem Segment einer Liste von mindestens einem Segment des ersten Blocks einen Zeitdatenwert (DSᵢ) zuordnet, der es ermöglicht zu bestimmen, ob eine Frist (D_{Gp}) zur Übertragung der Zugriffsrechtanforderung an den Zugriffsrechte-Server sich geändert hat,
- im Schritt b) die Kopfstation zusammen mit jedem Segment der Liste von Segmenten des ersten Blocks seinen zugeordneten Zeitdatenwert an das Endgerät überträgt (118),
- im Schritt c) das Endgerät zusammen mit jedem Segment der Liste von Segmente des ersten Blocks seinen zugeordneten Zeitdatenwert empfängt (124), dann
- in einem Schritt h) vor dem Schritt f) die vorbestimmte Verlängerungsfälligkeit (DRP) abhängig vom letzten empfangenen Zeitdatenwert ändert (144), um eine neue vorbestimmte Verlängerungsfälligkeit zu erhalten, die es dem Endgerät ermöglicht, abhängig von ihrem Wert und zu einem gegebenen Zeitpunkt vor oder gleich der Frist (D_{Gp}), die sich geändert hat, eine Zugriffsrechtanforderung an den Zugriffsrechte-Server zu übertragen.

2. Verfahren nach Anspruch 1, wobei jedes Zugriffsrecht mindestens einen Zugriffsdatenwert enthält, der zu der Gruppe gehört, die zusammengesetzt ist aus:
- einer Zugriffsregel, die Verwendungen des Multimedia-Inhalts beschreibt, die das Endgerät ausführen darf,
- einer Kennung dieser Zugriffsregel,
- einer Adresse dieser Zugriffsregel,
- einem kryptographischen Schlüssel (K_{Gp}), der notwendig ist, um auf jedes Segment des Multimedia-Inhaltsblocks (Gₚ) zuzugreifen, dem das Zugriffsrecht zugeordnet ist,
- einer Kennung dieses kryptographischen Schlüssels,
- einer Adresse dieses kryptographischen Schlüssels, und
- einem Initialisierungswert, der es ermöglicht, diesen kryptographischen Schlüssel zu berechnen.

3. Verfahren zum Senden, durch eine Kopfstation zur Durchführung des Verfahrens des Anspruchs 1, eines geschützten Multimedia-Inhalts, wobei die Kopfstation:
a) einem ersten bzw. einem zweiten Block (Gₚ) von Multimedia-Inhaltssegmenten (Sᵢ) ein erstes und ein zweites Zugriffsrecht (52) zuordnet (112), die ein Endgerät benötigt, um auf jedes Segment dieses ersten oder dieses zweiten Blocks zuzugreifen, um es zu spielen, wobei jedes dieser Segmente mindestens eine Folge von Gruppen von Videobildern oder von Audioframes enthält, wobei dieser erste und dieser zweite Block je eines oder mehrere Segmente enthalten, und im geschützten Multimedia-Inhalt dieser zweite Block auf diesen ersten Block folgt,
b) an das Endgerät eine erste Lizenz (Lₚ), die das erste Zugriffsrecht enthält, und einen Strom überträgt (116, 118), der jedes Segment des ersten Blocks enthält,
wobei das Verfahren **dadurch gekennzeichnet ist, dass** die Kopfstation:
- im Schritt a) jedem Segment einer Liste von mindestens einem Segment des ersten Blocks einen Zeitdatenwert (DSᵢ) zuordnet, der es ermöglicht zu bestimmen, ob eine Frist (D_{Gp}) zur Übertragung der Zugriffsrechtanforderung an den Zugriffsrechte-Server sich geändert hat,
- im Schritt b) zusammen mit jedem Segment der Liste von Segmenten des ersten Blocks seinen zugeordneten Zeitdatenwert an das Endgerät überträgt (118).

4. Verfahren zur Beschaffung, durch ein Endgerät zur Durchführung des Verfahrens nach Anspruch 1, eines geschützten Multimedia-Inhalts, wobei das Endgerät:
in der Empfangsphase (120):
c) die erste Lizenz empfängt (122),
d) den Strom empfängt (124), dann
in der Spielphase (130):
e) das erste Zugriffsrecht aus der ersten Lizenz entnimmt (134), dann dieses entnommene erste Zugriffsrecht verwendet (136), um auf die Segmente des ersten Blocks zuzugreifen, zumindest, um den Zugriff dieses Endgeräts auf die Segmente des ersten Blocks abwechselnd zu erlauben und zu verbieten, oder um die Segmente des ersten Blocks zu entschlüsseln,
f) bei einer vorbestimmten Verlängerungsfälligkeit eine Zugriffsrechtanforderung an den Zugriffsrechte-Server überträgt (148),
g) der Zugriffsrechte-Server als Antwort auf die Zugriffsrechtanforderung eine zweite Lizenz (Lₚ₊₁) an das Endgerät überträgt (116), die das zweite Zugriffsrecht enthält,
wobei das Verfahren **dadurch gekennzeichnet ist, dass**:
in der Empfangsphase (120) das Endgerät:
- im Schritt c) zusammen mit jedem Segment der Liste von Segmenten des ersten Blocks seinen zugeordneten Zeitdatenwert empfängt (124), dann
- in einem Schritt h) vor dem Schritt f) die vorbestimmte Verlängerungsfälligkeit (DRP) abhängig vom letzten empfangenen Zeitdatenwert ändert (144), um eine neue vorbestimmte Verlängerungsfälligkeit zu erhalten, die es dem Endgerät ermöglicht, abhängig von ihrem Wert und zu einem gegebenen Zeitpunkt vor oder gleich der Frist (D_{Gp}), die sich geändert hat, eine Zugriffsrechtanforderung an den Zugriffsrechte-Server zu übertragen.

5. Beschaffungsverfahren nach Anspruch 4, wobei im Schritt h) das Endgerät:
- eine der Bedingungen DSₜ > DSₜ₋₁ + ΔT₁ und DSₜ ≥ DSₜ₋₁ + ΔT₁ testet (142), wobei DSₜ der letzte empfangene Zeitdatenwert ist, DSₜ₋₁ der vorletzte empfangene Zeitdatenwert ist, und ΔT₁ eine erste vorbestimmte Schwelle positiv oder null ist,
- wenn die getestete Bedingung bestätigt wird, die Änderung (144) der vorbestimmten Verlängerungsfälligkeit (DRP) aktiviert, und sonst diese Änderung der vorbestimmten Verlängerungsfälligkeit nicht aktiviert.

6. Beschaffungsverfahren nach Anspruch 4, wobei im Schritt h) das Endgerät:
- eine der Bedingungen DSₜ < DSₜ₋₁ - ΔT₂ und DSₜ ≤ DSₜ₋₁ - ΔT₂ testet (142), wobei DSₜ der letzte empfangene Zeitdatenwert ist, DSₜ₋₁ der vorletzte empfangene Zeitdatenwert ist, und ΔT₂ eine zweite vorbestimmte Schwelle positiv oder null ist,
- wenn die getestete Bedingung bestätigt wird, die Änderung (144) der vorbestimmten Verlängerungsfälligkeit (DRP) aktiviert, und sonst diese Änderung der vorbestimmten Verlängerungsfälligkeit nicht aktiviert.

7. Beschaffungsverfahren nach Anspruch 4, wobei im Schritt h) das Endgerät die vorbestimmte Verlängerungsfälligkeit (DRP) durch Zuweisung eines abhängig vom letzten empfangenen Zeitdatenwert berechneten Werts und mittels einer Funktion ändert (144), die die vorbestimmten Verlängerungsfälligkeiten der Endgeräte in einem begrenzten Zeitraum gleichmäßig verteilen kann, dessen Obergrenze es dem Endgerät erlaubt, den Schritt f) zu einem gegebenen Zeitpunkt vor oder gleich der Frist (D_{Gp}), die sich geändert hat, auszuführen, wobei diese Verteilung insofern gleichmäßig ist, als die Verlängerungsfälligkeiten in jedem in diesem Zeitraum enthaltenen Teilzeitraum gegebener Amplitude gleich wahrscheinlich sind.

8. Beschaffungsverfahren nach Anspruch 4, wobei im Schritt h) das Endgerät den letzten empfangenen Zeitdatenwert mit einem vorab gespeicherten Code vergleicht (140), dann, wenn der letzte Zeitdatenwert gleich diesem vorab gespeicherten Code ist, das Endgerät sofort die Durchführung des Schritts f) vornimmt, unabhängig von der vorbestimmten Verlängerungsfälligkeit (DRP), ohne vorab die vorbestimmte Verlängerungsfälligkeit abhängig vom letzten empfangenen Zeitdatenwert zu ändern, und im gegenteiligen Fall das Endgerät die vorbestimmte Verlängerungsfälligkeit abhängig vom letzten empfangenen Zeitdatenwert ändert (144) und dann die Durchführung des Schritts f) (146, 148) nur dann vornimmt, wenn die vorbestimmte Verlängerungsfälligkeit erreicht ist.

9. Informationsaufzeichnungsträger (16, 46), **dadurch gekennzeichnet, dass** er Anweisungen zur Durchführung eines Verfahrens nach einem der vorhergehenden Ansprüche enthält, wenn diese Anweisungen von einem Elektronenrechner (14, 44) ausgeführt werden.

10. Kopfstation (1) zur Durchführung eines Sendeverfahrens eines geschützten Multimedia-Inhalts nach Anspruch 3, wobei die Kopfstation in der Lage ist:
a) einem ersten bzw. einem zweiten Block von Multimedia-Inhaltssegmenten ein erstes und ein zweites Zugriffsrecht zuzuordnen, die ein Endgerät (4) benötigt, um auf jedes Segment dieses ersten oder dieses zweiten Blocks zuzugreifen, um es zu spielen, wobei jedes dieser Segmente mindestens eine Folge von Gruppen von Videobildern oder von Audioframes enthält, wobei dieser erste und dieser zweite Block je eines oder mehrere Segmente enthält, und im geschützten Multimedia-Inhalt dieser zweite Block auf diesen ersten Block folgt,
b) an das Endgerät (4) eine erste Lizenz, die das erste Zugriffsrecht enthält, und einen Strom zu übertragen, der jedes Segment des ersten Blocks enthält,
wobei die Kopfstation **dadurch gekennzeichnet ist, dass** sie einen Elektronenrechner (14) enthält, der programmiert ist, um:
- im Schritt a) jedem Segment einer Liste von mindestens einem Segment des ersten Blocks einen Zeitdatenwert zuzuordnen, der es ermöglicht zu bestimmen, ob eine Frist zur Übertragung der Zugriffsrechtanforderung an den Zugriffsrechte-Server (2) sich geändert hat,
- im Schritt b) zusammen mit jedem Segment der Liste von Segmenten des ersten Blocks seinen zugeordneten Zeitdatenwert an das Endgerät zu übertragen.

11. Endgerät (4) zur Durchführung eines Verfahrens zur Beschaffung eines geschützten Multimedia-Inhalts nach einem der Ansprüche 4 bis 8, wobei das Endgerät fähig ist:
in der Empfangsphase:
c) die erste Lizenz zu empfangen,
d) den Strom zu empfangen,
dann in der Spielphase:
e) das erste Zugriffsrecht aus der ersten Lizenz zu entnehmen, dann dieses entnommene erste Zugriffsrecht zu verwenden, um auf die Segmente des ersten Blocks zuzugreifen, zumindest, um den Zugriff dieses Endgeräts auf die Segmente des ersten Blocks abwechselnd zu erlauben und zu verbieten, oder um die Segmente des ersten Blocks zu entschlüsseln,
f) wenn eine vorbestimmte Verlängerungsfälligkeit erreicht ist, eine Zugriffsrechtanforderung an den Zugriffsrechte-Server (2) zu übertragen,
wobei das Endgerät **dadurch gekennzeichnet ist, dass** es einen Elektronenrechner (44) enthält, der programmiert ist, um:
in der Empfangsphase:
- im Schritt c) zusammen mit jedem Segment der Liste von Segmenten des ersten Blocks seinen zugeordneten Zeitdatenwert zu empfangen, dann
- im Schritt h) die vorbestimmte Verlängerungsfälligkeit abhängig vom letzten empfangenen Zeitdatenwert zu ändern, um eine neue vorbestimmte Verlängerungsfälligkeit zu erhalten, die es dem Endgerät ermöglicht, abhängig von ihrem Wert und zu einem gegebenen Zeitpunkt vor oder gleich der Frist, die sich geändert hat, zu entscheiden, eine Zugriffsrechtanforderung an den Zugriffsrechtserver zu übertragen.

## Claims

1. Method for providing, by a head end, a multimedia content protected by a multimedia content protection system, to terminals mechanically independent of one another and connected to one and the same access rights server via a wide area information transmission network, a method in which:
in a sending phase (110), the head end:
a) associates (112) respectively, with a first and a second blocks (Gₚ) of segments (Sᵢ) of multimedia content, a first and a second access rights (52) necessary to a terminal to access any segment of this first or this second block in order to play it, each of these segments comprising at least one series of groups of video pictures or of audio frames, this first and this second blocks each comprising one or more segments, and this first block being followed by this second block in the protected multimedia content,
b) transmits (116, 118) to the terminal, via a point-to-point link (34), a first license (Lₚ) comprising the first access right (52), and transmits to each of the terminals, via a point-to-multipoint link (32), a stream (6) comprising each segment (Sᵢ) of the first block (Gₚ),
in a reception phase (120), the terminal:
c) receives (122) the first license,
d) receives (124) the stream, then,
in a playing phase (130), the terminal:
e) extracts (134) the first access right from the first license, then uses (136) this first extracted access right to authorize, and, alternately, inhibit, the access of this terminal to the segments of the first block, or to decrypt the segments of the first block,
f) when a predetermined renewal expiration date is reached, transmits (148), to the access rights server, an access rights request,
g) in response to the access rights request, the access rights server transmits (116), to the terminal, a second license (Lₚ₊₁) comprising the second access right,
the method being **characterized in that**:
- in the step a), the head end associates, with each segment of a list of at least one segment of the first block, a temporal datum (DSᵢ) which makes it possible to determine whether a limit date (D_{Gp}) for transmitting the access rights request to the access rights server has changed,
- in the step b), the head end transmits (118) to the terminal, jointly with each segment of the list of segments of the first block, its associated temporal datum,
- in the step c), the terminal receives (124), jointly with each segment of the list of segments of the first block, its associated temporal datum, then,
- in a step h), prior to the step f), modifies (144) the predetermined renewal expiration date (DRP) as a function of the last temporal datum received to obtain a new predetermined renewal expiration date which allows the terminal to decide, as a function of its value and at a given instant prior to or equal to the limit date (D_{Gp}) which has changed, to transmit an access rights request to the access rights server.

2. Method according to Claim 1, in which any access right comprises at least one access datum which belongs to the group composed:
- of an access rule, which describes uses of the multimedia content that the terminal is authorized to make,
- of an identifier of this access rule,
- of an address of this access rule,
- of a cryptographic key (K_{Gp}) necessary to access any segment of the block (Gₚ) of multimedia content with which the access right is associated,
- of an identifier of this cryptographic key,
- of an address of this cryptographic key, and
- of an initialization value which makes it possible to compute this cryptographic key.

3. Method for sending, by a head end, for the implementation of the method of Claim 1, a protected multimedia content, in which the head end:
a) associates (112) respectively, with a first and a second block (Gₚ) of segments (Sᵢ) of multimedia content, a first and a second access right (52) necessary to a terminal to access any segment of this first or this second block in order to play it, each of these segments comprising at least one series of groups of video pictures or of audio frames, this first and this second block each comprising one or more segments, and this first block being followed by this second block in the protected multimedia content,
b) transmits (116, 118) to the terminal a first license (Lₚ) comprising the first access right, and a stream comprising each segment of the first block,
the method being **characterized in that** the head end:
- in the step a), associates, with each segment of a list of at least one segment of the first block, a temporal datum (DSᵢ) which makes it possible to determine whether a limit date (D_{Gp}) for transmitting the access rights request to the access rights server has changed,
- in the step b), transmits (118) to the terminal, jointly with each segment of the list of segments of the first block, its associated temporal datum.

4. Method for obtaining, by a terminal, for the implementation of the method of Claim 1, a protected multimedia content, in which the terminal:
in the reception phase (120):
c) receives (122) the first license,
d) receives (124) the stream, then,
in the playing phase (130):
e) extracts (134) the first access right from the first license then uses (136) this first extracted access right in order to access the segments of the first block, at least to authorize, and, alternately, inhibit, the access of this terminal to the segments of the first block, or to decrypt the segments of the first block,
f) at a predetermined renewal expiration date, transmits (148), to the access rights server, an access rights request,
g) in response to the access rights request, the access rights server transmits (116), to the terminal, a second license (Lₚ₊₁) comprising the second access right,
the method being **characterized in that**:
in the reception phase (120), the terminal:
- in the step c), receives (124), jointly with each segment of the list of segments of the first block, its associated temporal datum, then,
- in a step h) prior to the step f), modifies (144) the predetermined renewal expiration date (DRP) as a function of the last temporal datum received to obtain a new predetermined renewal expiration date which allows the terminal to decide, as a function of its value and at a given instant prior to or equal to the limit date (D_{Gp}) which has changed, to transmit an access rights request to the access rights server.

5. Obtention method according to Claim 4, in which, in the step h), the terminal:
- tests (142) one of the conditions DSₜ > DSₜ₋₁ + ΔT₁ and DSₜ ≥ DSₜ₋₁ + ΔT₁, in which DSₜ is the last temporal datum received, DSₜ₋₁ is the penultimate temporal datum received, and ΔT₁ is a first positive or zero predetermined threshold,
- if the condition tested is borne out, triggers the modification (144) of the predetermined renewal expiration date (DRP) and, otherwise, does not trigger this modification of the predetermined renewal expiration date.

6. Obtention method according to Claim 4, in which, in the step h), the terminal:
- tests (142) one of the conditions DSₜ < DSₜ₋₁ + ΔT₂ and DSₜ ≤ DSₜ₋₁ + ΔT₂, in which DSₜ is the last temporal datum received, DSₜ₋₁ is the penultimate temporal datum received, and ΔT₂ is a second positive or zero predetermined threshold,
- if the condition tested is borne out, triggers the modification (144) of the predetermined renewal expiration date (DRP) and, otherwise, does not trigger this modification of the predetermined renewal expiration date.

7. Obtention method according to Claim 4, in which, in the step h), the terminal modifies (144) the predetermined renewal expiration date (DRP) by assigning to it a value computed as a function of the last temporal datum received and by means of a function that can uniformly allocate the predetermined renewal expiration dates to the terminals, within a bounded interval whose upper bound allows the terminal to execute the step f) at a given instant prior to or equal to the limit date (D_{Gp}) which has changed, this allocation being uniform in that the renewal expiration dates are equally probable within any sub-interval of given amplitude included in this interval.

8. Obtention method according to Claim 4, in which, in the step h), the terminal compares (140) the last temporal datum received to a pre-stored code, then, if the last temporal datum is equal to this pre-stored code, the terminal proceeds immediately to implement the step f) independently of the predetermined renewal expiration date (DRP), without, first, modifying the predetermined renewal expiration date as a function of the last temporal datum received, and, otherwise, the terminal modifies (144) the predetermined renewal expiration date as a function of the last temporal datum received then proceeds to implement the step f) (146, 148) only when the predetermined renewal expiration date is reached.

9. Information storage medium (16, 46), **characterized in that** it comprises instructions for the implementation of a method according to any one of the preceding claims, when these instructions are executed by an electronic computer (14, 44).

10. Head end (1) for implementing a method for sending a protected multimedia content according to Claim 3, in which the head end is capable:
a) of associating respectively, with a first and a second block of segments of multimedia content, a first and a second access right necessary to a terminal (4) to access any segment of this first or this second block in order to play it, each of these segments comprising at least one series of groups of video pictures or of audio frames, this first and this second block each comprising one or more segments, and this first block being followed by this second block in the protected multimedia content,
b) of transmitting to the terminal (4) a first license comprising the first access right, and a stream comprising each segment of the first block,
the head end being **characterized in that** it comprises an electronic computer (14) programmed to:
- in the step a), associate, with each segment of a list of at least one segment of the first block, a temporal datum which makes it possible to determine whether a limit date for transmitting the access rights request to the access rights server (2) has changed,
- in the step b), transmit to the terminal, jointly with each segment of the list of segments of the first block, its associated temporal datum.

11. Terminal (4) for implementing a method for obtaining a protected multimedia content according to any one of Claims 4 to 8, in which the terminal is capable:
in the reception phase:
c) of receiving the first license,
d) of receiving the stream, then,
in the playing phase:
e) of extracting the first access right from the first license, then of using this first extracted access right in order to access the segments of the first block, at least to authorize, and, alternately, inhibit, the access of this terminal to the segments of the first block, or to decrypt the segments of the first block,
f) when a predetermined renewal expiration date is reached, of transmitting, to the access rights server (2), an access rights request,
the terminal being **characterized in that** it comprises an electronic computer (44) programmed to:
in the reception phase:
- in the step c), receive, jointly with each segment of the list of segments of the first block, its associated temporal datum, then,
- in the step h), modify the predetermined renewal expiration date as a function of the last temporal datum received to obtain a new predetermined renewal expiration date which allows the terminal to decide, as a function of its value and at a given instant prior to or equal to the limit date which has changed, to transmit an access rights request to the access rights server.
